# DEMANDE DE BREVET EUROPEEN

(11) **EP 0 976 671 A1**
(43) Date de publication de la demande: **02.02.2000**
(21) Numéro de dépôt: 99450016.3
(22) Date de dépôt: 27.07.1999
(51) Int. Cl.: B65G 57/06, B65G 57/24

(54) **Dispositif de palettisation comprenant une alimentation de palettes vides par le haut**

(30) Priorité: 27.07.1998 FR 9809797
(71) Demandeur: Cetec Industrie Conditionnement, 24650 Chancelade (FR)
(72) Inventeur: LABRUE Jean-Claude, F-24460 AGONAC (FR)
(74) Mandataire: Thébault, Jean-Louis

(57) **Abrégé**

- L'objet de l'invention est un dispositif de palettisation couche par couche, comprenant un premier élévateur (106) prévu pour recevoir une palette (102) en cours de remplissage, des moyens (108) de positionnement des colis (104) dans une position prédéterminée pour chaque couche, caractérisé en ce qu'il comprend des moyens (124) d'introduction d'une palette vide pour qu'elle soit en position pour recevoir une première couche de colis, lesdits moyens se substituant au premier élévateur (106) lors du changement de palette en soutenant la palette.

## Description

La présente invention a pour objet un dispositif de palettisation comprenant une alimentation de palettes vides par le haut.

Les palettiseurs sont largement répandus dans le domaine du conditionnement, ils permettent notamment de déposer des colis sur une palette selon un agencement bien précis, couche après couche, jusqu'à la hauteur souhaitée. On désigne ici par colis tous les objets, tels que des cartons, des caisses, des sacs, ou similaire qui peuvent constituer une charge stable sur une palette.

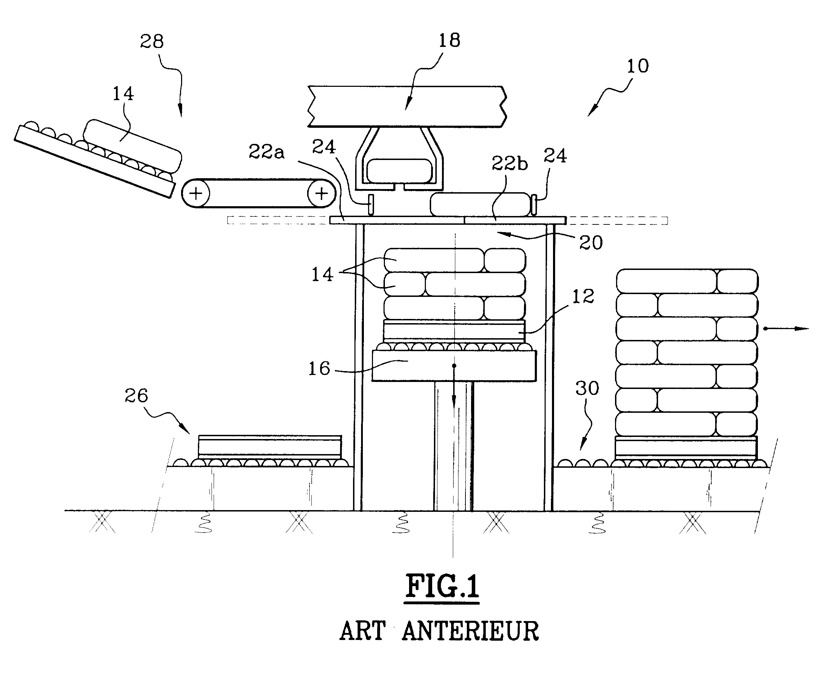

Un dispositif de palettisation 10 de l'art antérieur est illustré sur la figure 1, il permet d'empiler sur une palette 12 des colis 14 sous forme de sacs suivant un schéma de palettisation bien précis. De façon connue, ce dispositif comprend un élévateur 16 sur lequel repose la palette 14 en cours de remplissage, une tête de dépose 18 qui est susceptible de saisir et de déposer les colis dans une position souhaitée sur une fausse palette 20. Dans d'autres dispositifs de palettisation, la tête de dépose 18 peut être remplacée par tout autre moyen approprié susceptible de placer les colis dans une position prédéterminée. Cette fausse palette qui est destinée à recevoir une couche de colis, est réalisée par deux plaques 22a, 22b horizontales qui sont susceptibles de s'écarter l'une par rapport à l'autre par coulissement horizontal afin de laisser tomber les colis qu'elle contient sur la couche supérieure des colis déjà déposés sur la palette 14. Certains autres dispositifs de palettisation ne comprennent pas de fausse palette, les sacs sont alors déposés directement sur les sacs de la dernière couche de la palette.

En complément, la fausse palette 20 comprend sur ses quatre côtés des rives 24, éventuellement actionnées par des vérins, qui permettent de positionner correctement les colis déposés sur la fausse palette 20, et de les maintenir pendant l'ouverture des plaques 22a et 22b.

Dès qu'une nouvelle couche est réalisée, la palette 14 descend grâce à l'élévateur 16, d'une hauteur sensiblement égale à celle d'une couche de colis, afin que le niveau supérieur de la palette chargée reste invariable juste au-dessous de la fausse palette, et que les colis quittant la fausse palette ne tombent que d'une très faible hauteur.

Ce dispositif est en général complété par des moyens 26 d'alimentation de palettes vides, des moyens 28 d'alimentation en colis tels que décrits dans le brevet européen EP 562.197 au nom du demandeur, et des moyens 30 d'évacuation de palettes pleines.

Lors du changement de palette, l'élévateur 16 amène la palette pleine au droit des moyens d'alimentation 28 et d'évacuation 30 des palettes, la palette pleine est alors évacuée de l'élévateur, et une palette vide la remplace. Ensuite, l'élévateur 16 remonte afin de positionner la surface supérieure de la palette vide juste au-dessous de la fausse palette 20.

La durée nécessaire pour effectuer ces différentes opérations est nettement supérieure à la durée de réalisation d'une couche de colis sur la fausse palette si bien que l'alimentation en sacs du dispositif de palettisation doit être interrompue. Ce phénomène est encore plus accentué lorsqu'on palettise sans fausse palette, directement sur la dernière couche de sacs.

Cette façon de procéder génère automatiquement une perte de temps, et des risques de pannes dues aux arrêts et aux redémarrages fréquents des moyens d'alimentation de colis.

Par ailleurs, ces dispositifs de palettisation qui sont généralement placés en bout de chaîne de conditionnement, ne permettent pas d'avoir un flux continu des colis. Aussi, afin de compenser l'interruption de l'alimentation en sacs du dispositif de palettisation et d'éviter l'arrêt de toute la chaîne de conditionnement, certains dispositifs comprennent un volume tampon afin de stocker les sacs en amont pour éviter l'arrêt du reste de la chaîne.

Comme on peut le constater, les dispositifs de l'art antérieur ne donnent pas pleinement satisfaction, car le changement de palette entraîne automatiquement l'arrêt de la mise en place des colis.

Aussi, l'objectif de l'invention est de proposer un dispositif de palettisation qui autorise la mise en place des colis de façon continue, et qui ne génère pas de temps mort lors du changement de palette grâce à une optimisation du flux des palettes.

A cet effet, l'invention a pour objet un dispositif de palettisation couche par couche, comprenant un premier élévateur prévu pour recevoir une palette en cours de remplissage, des moyens de positionnement des colis dans une position prédéterminée pour chaque couche, caractérisé en ce qu'il comprend des moyens d'introduction d'une palette vide pour qu'elle soit en position pour recevoir une première couche de colis, lesdits moyens se substituant au premier élévateur lors du changement de palette.

De préférence, le dispositif comprend des moyens de translation verticale, qui sont susceptibles d'assurer la translation verticale de la palette en début de remplissage.

Selon un mode de réalisation, les moyens d'introduction de palettes vides comprennent un chariot qui peut se translater horizontalement par rapport au dispositif dans sa partie supérieure, muni de bras formant fourche, prévus pour pénétrer dans la palette initialement vide.

Selon un autre mode de réalisation, les moyens d'introduction de palettes vides comprennent un chariot qui peut se translater horizontalement par rapport au dispositif dans sa partie supérieure, muni de doigts, disposés de chaque côté de la palette, prévus pour pénétrer dans la palette initialement vide.

Avantageusement, les moyens de translation verticale sont réalisés par une glissière disposée entre les bras et le chariot qui autorise une translation verticale de la palette en début de remplissage, d'une hauteur de quelques couches.

Selon une caractéristique de l'invention, le dispositif de palettisation comprend des moyens d'alimentation en palettes vides disposés en partie inférieure, et un second élévateur qui complète les moyens d'introduction de palettes vides en assurant la translation verticale des palettes vides issues desdits moyens d'alimentation vers la partie supérieure du dispositif au droit des bras du chariot.

D'autres caractéristiques et avantages ressortiront de la description qui va suivre, donnée à titre d'exemple uniquement et en regard des dessins annexés sur lesquels :
- la figure 1 est une vue en élévation d'un dispositif de palettisation de l'art antérieur,
- la figure 2 est une vue en élévation d'un dispositif de palettisation selon l'invention, et
- les figures 3A à 3E montrent un synoptique du fonctionnement du dispositif.

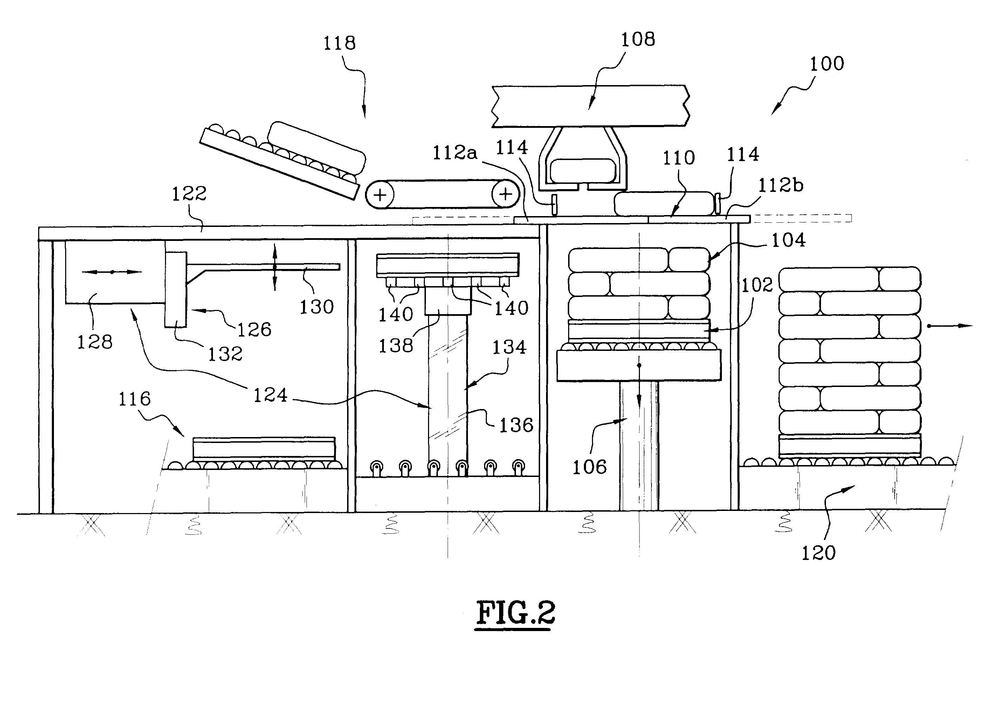

Sur la figure 2, on a représenté un dispositif de palettisation 100 selon l'invention, qui permet de palettiser sur une palette 102 des colis 104. Il comprend de façon connue un premier élévateur 106 sur lequel repose la palette en cours de remplissage, et des moyens 108 de positionnement des colis dans une position prédéterminée. Ces moyens 108 de positionnement peuvent agencer les sacs un à un pour chaque couche, ou alors empiler une à une des couches préformées de sacs. Selon un mode de réalisation illustré sur la figure 2, les moyens 108 de positionnement des colis comprennent une tête de dépose, disposée au-dessus de l'élévateur 106, qui est susceptible de saisir et de déposer les colis sur une fausse palette 110 disposée entre la palette 102 et la tête de dépose 108. Cette fausse palette 110 qui est susceptible de recevoir une couche de colis, est réalisée par deux plaques 112a, 112b horizontales susceptibles de s'écarter l'une par rapport à l'autre par coulissement horizontal afin de laisser tomber les colis qu'elle contient sur la couche supérieure des colis déjà déposés sur la palette 102.

Dès qu'une nouvelle couche est réalisée, la palette 102 descend grâce à l'élévateur 106, d'une hauteur sensiblement égale à celle d'une couche de colis, afin que le niveau supérieur de la palette chargée reste invariable, juste au-dessous de la fausse palette, et que les colis quittant la fausse palette ne tombent que d'une très faible hauteur.

De préférence, la fausse palette 110 comprend sur ses quatre côtés des rives 114, actionnées par des vérins ou des moteurs électriques, qui permettent de positionner correctement les colis déposés sur la fausse palette 110, et de les maintenir pendant l'ouverture des plaques 112a et 112b.

De façon connue, le dispositif de palettisation comprend en complément des moyens 116 d'alimentation de palettes vides, des moyens 118 d'alimentation de colis tels que décrits dans le brevet EP 562.197 au nom du demandeur, et des moyens 120 d'évacuation des palettes pleines.

L'ensemble des différents éléments constituant le dispositif de palettisation peut être agencé sur un bâti 122 de manière connue.

De préférence, la surface supérieure de l'élévateur est munie de rouleaux fous qui permettent de translater aisément, lorsque l'élévateur est en position basse, la palette vers les moyens 120 d'évacuation réalisés par un convoyeur à rouleaux fous.

De la même façon, les moyens 116 d'alimentation en palettes vides comprennent un convoyeur à rouleaux fous.

Selon l'invention, le dispositif de palettisation comprend en outre des moyens 124 d'introduction d'une palette vide pour qu'elle soit en position pour recevoir une première couche de colis, qui se substituent au premier élévateur 106 lors du changement de palette en soutenant la palette vide. Ainsi, ces moyens 124 peuvent maintenir la palette initialement vide pendant que le premier élévateur 106 évacue la palette pleine et remonte afin de reprendre la palette en cours de chargement tenue par lesdits moyens 124. Ces moyens 124 sont disposés entre le convoyeur 116 d'alimentation de palettes vides et le premier élévateur 106, et assurent l'acheminement des palettes vides du convoyeur 116 d'alimentation vers la zone de palettisation située entre la tête de dépose 108 et le premier élévateur 106.

Le dispositif de palettisation comprend en plus des moyens 126 de translation verticale d'une palette, disposés au-dessus du premier élévateur 106. Ces moyens 126 de translation se substituent audit premier élévateur lors du changement de palette en assurant la translation verticale vers le bas de la palette en début de remplissage. Ainsi, ces moyens 126 sont susceptibles d'assurer le déplacement vertical de la palette pendant que le premier élévateur 106 évacue la palette pleine et remonte afin de reprendre la palette en cours de remplissage. Ainsi pendant le changement de palette, la palettisation peut se poursuivre sans aucune interruption de l'alimentation en colis.

Selon un mode de réalisation préféré illustré sur la figure 2, les moyens 124 d'introduction comprennent un chariot 128 qui peut se translater horizontalement par rapport au bâti 122, dans la partie supérieure dudit bâti, et qui comprend deux bras 130 formant une fourche, prévus pour pénétrer dans la palette initialement vide, et une glissière 132 afin d'assurer une translation verticale desdits bras 130 par rapport audit chariot 128. Cette glissière 132 constitue les moyens 126 de translation verticale.

Selon un autre mode de réalisation non représenté, les deux bras 130 formant fourche peuvent être remplacés par des doigts, disposés de chaque côté de la palette initialement vide, prévus pour pénétrer dans ladite palette.

En complément, un second élévateur 134 est prévu entre le convoyeur 116 d'alimentation de palettes vides et le premier élévateur 106, afin d'assurer la translation verticale d'une palette vide du convoyeur 116 d'alimentation vers le chariot 128 disposé en partie haute du bâti 122.

Le second élévateur 134 et le chariot 128 constituent dans ce mode de réalisation les moyens 124 d'introduction d'une palette vide en partie supérieure du premier élévateur 106.

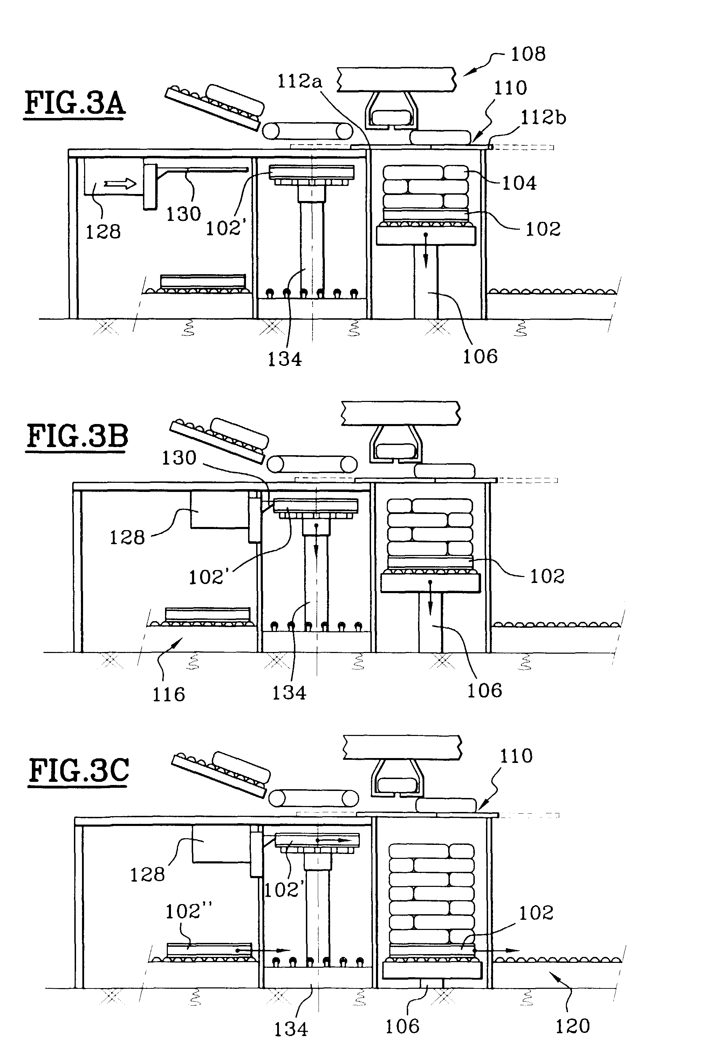

Le fonctionnement du dispositif de palettisation de l'invention est maintenant décrit en regard des figures 3A à 3E.

Sur la figure 3A, une palette 102 est en cours de remplissage. La tête de dépose 108 agence les sacs sur la fausse palette 110. Dès qu'une couche de sacs est réalisée sur cette fausse palette, les plaques 112a, 112b s'écartent et les sacs disposés sur la fausse palette tombent sur la couche supérieure des sacs déjà disposés sur la palette 102. Après chaque couche, le premier élévateur 106 descend d'une hauteur sensiblement égale à celle d'une couche, afin que le niveau supérieur de la palette chargée reste invariable, juste au-dessous de la fausse palette, et que les sacs quittant la fausse palette ne tombent que d'une très faible hauteur.

Le second élévateur 134 est en position haute, afin de disposer une palette vide 102' au droit des bras 130 du chariot 128, ledit chariot étant décalé par rapport au second élévateur.

Sur la figure 3B, la palette 102 est toujours en cours de remplissage.

Le chariot 128 se translate afin de saisir la palette vide 102' à l'aide de ses bras 130. Dès cet instant, le second élévateur peut descendre afin de se positionner au droit du convoyeur 116 d'alimentation de palettes vides.

Sur la figure 3C, la palette 102 est complétée. Le premier élévateur 106 descend alors légèrement afin de se positionner au droit du convoyeur 120 d'évacuation, et la palette 102 complète est évacuée à l'aide d'un actionneur non représenté mais connue de l'homme de l'art. En même temps, le chariot 128 se translate horizontalement afin de positionner la palette vide 102' sous la fausse palette 110 et au-dessus du premier élévateur 106, et une seconde palette vide 102" est disposée sur le second élévateur 134 à l'aide d'un actionneur non représenté.

La durée de ces translations est inférieure au temps mis pour préparer une nouvelle couche de sacs sur la fausse palette, si bien que la palettisation peut se poursuivre sans interruption de l'alimentation en sacs.

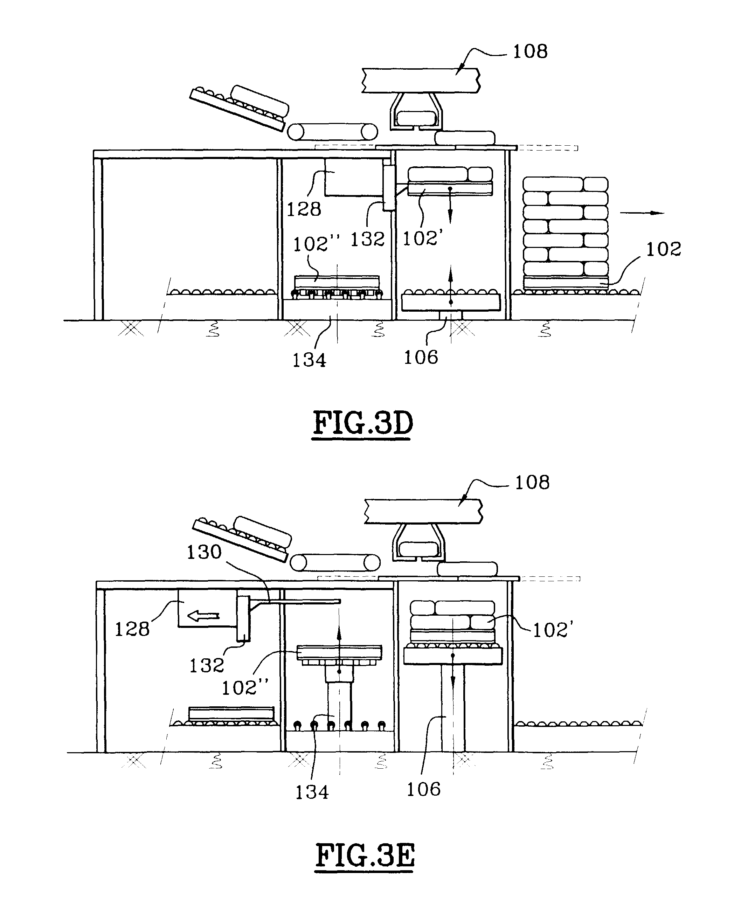

Sur la figure 3D, la palette 102', tenue par le chariot 128 via les bras 130, est en cours de remplissage. Après chaque nouvelle couche déposée, la palette 102' descend grâce à la glissière 132. Ainsi, cette glissière 132 autorise la translation verticale de la palette 102' d'une hauteur de quelques couches, approximativement trois, afin de permettre au premier élévateur 106 de remonter et de reprendre la palette 102' en cours de remplissage.

Sur la figure 3E, la palette 102' en cours de remplissage est reprise par le premier élévateur 106. Le chariot 128 se translate horizontalement afin d'être décalé par rapport au premier et au second élévateur, ses bras 130 remonte en position haute. Le second élévateur remonte la palette vide 102" au droit des bras 130 du chariot. L'ensemble du dispositif se retrouve dans la même position qu'à la figure 3A, et le cycle de chargement des palettes peut continuer sans aucune interruption.

Les différents moyens qui permettent de déclencher, de réaliser et d'arrêter les mouvement des différents éléments constituants le dispositif ne sont pas décrits car ils sont à la portée de l'homme de l'art.

Il va de soi que cette description a été donnée à titre d'exemple uniquement, et que la présente invention englobe de nombreuses variantes.

Aussi, le dispositif de palettisation peut ne pas comprendre une fausse palette, dans ce cas la tête de dépose agence les colis directement sur la dernière couche de la palette.

De même, le dispositif de palettisation peut très bien ne pas comprendre de tête de dépose, dans ce cas la préparation de la couche peut se faire par translation horizontales des sacs.

Selon un autre mode de réalisation, les couches de sacs peuvent arriver déjà préformées dans le dispositif grâce à des moyens d'alimentation en couches préformées qui les disposent une à une sur la fausse palette ou directement sur la dernière couche de sacs disposés sur la palette.

Par ailleurs, on peut concevoir un dispositif qui comprend un convoyeur d'alimentation de palettes vides qui achemine directement les palettes vides en partie supérieure du premier élévateur, et dans ce cas le second élévateur peut être supprimé.

Selon un autre procédé d'alimentation en palettes vides, au lieu de remonter une à une les palettes vides grâce au second élévateur, on peut disposer une pile de palettes vides sur le second élévateur qui sont saisies par le dessus de la pile une à une par le chariot 128.

Enfin, les fonctions réalisées par le chariot 128 et le second élévateur 134 peuvent être regroupées. Dans ce cas, la glissière 132 modifiée peut réaliser également la translation verticale effectuée par le second élévateur.

## Revendications

1. Dispositif de palettisation couche par couche, comprenant un premier élévateur (106) prévu pour recevoir une palette (102) en cours de remplissage, des moyens (108) de positionnement des colis (104) dans une position prédéterminée pour chaque couche, caractérisé en ce qu'il comprend des moyens (124) d'introduction d'une palette vide pour qu'elle soit en position pour recevoir une première couche de colis, lesdits moyens se substituant au premier élévateur (106) lors du changement de palette.

2. Dispositif de palettisation selon la revendication 1, caractérisé en ce qu'il comprend des moyens (126) de translation verticale, qui sont susceptibles d'assurer la translation verticale de la palette en début de remplissage.

3. Dispositif de palettisation selon la revendication 1 ou 2, caractérisé en ce que les moyens (124) d'introduction de palettes vides comprennent un chariot (128) qui peut se translater horizontalement par rapport au dispositif dans sa partie supérieure, muni de bras (130) formant fourche, prévus pour pénétrer dans la palette initialement vide.

4. Dispositif de palettisation selon la revendication 1 ou 2, caractérisé en ce que les moyens (124) d'introduction de palettes vides comprennent un chariot (128) qui peut se translater horizontalement par rapport au dispositif dans sa partie supérieure, muni de doigts, disposés de chaque côté de la palette initialement vide, prévus pour pénétrer dans ladite palette.

5. Dispositif de palettisation selon l'une quelconque des revendications 2 à 4, caractérisé en ce que les moyens (126) de translation verticale sont réalisés par une glissière (132) disposée entre les bras (130) et le chariot (128) qui autorise une translation verticale de la palette en début de remplissage, d'une hauteur de quelques couches.

6. Dispositif de palettisation selon l'une quelconque des revendications précédentes, caractérisé en ce qu'il comprend des moyens (116) d'alimentation en palettes vides disposés en partie inférieure, et un second élévateur (134) qui complète les moyens (124) d'introduction de palettes vides en assurant la translation verticale des palettes vides issues desdits moyens (116) d'alimentation vers la partie supérieure du dispositif au droit des bras (130) du chariot.
